# EUROPÄISCHE PATENTANMELDUNG

(11) **EP 1 602 903 A2**
(43) Veröffentlichungstag der Anmeldung: **07.12.2005**
(21) Anmeldenummer: 05101968.5
(22) Anmeldetag: 02.03.2005
(51) Int. Cl.: G01J 3/50

(54) **Verfahren und Vorrichtung zur farbmetrischen Messung von Effekt- und Uni-Lacken**

(30) Priorität: 04.06.2004 DE 102004027448
(71) Anmelder: BASF Coatings AG, 48165 Münster (DE)
(72) Erfinder: Hoffmann, Peter, 48308, Senden (DE)
(74) Vertreter: Fitzner, Uwe

(57) **Zusammenfassung**

Bei dem Verfahren bzw. der Vorrichtung zur farbmetrischen Messung von Effekt- und Uni-Lacken wird von einer Lichtquelle (1) Licht auf mindestens eine Detektionsfläche (2) auf einer lackierten Messfläche (4) einer Probe (3) eingestrahlt und das von der Messfläche (4) der Probe (3) reflektierte Licht von einem Flächendetektor (5) empfangen. Die Beleuchtungs- und die Detektionswinkel werden relativ zur Messfläche gegeneinander verstellt und RGB-Werte des für eine Mehrzahl von Winkeln vom Flächendetektor empfangenen Lichts in Abhängigkeit des Beleuchtungs- und Detektionswinkel registriert und einer Datenverarbeitungseinrichtung zugeführt. Die so gewonnenen Datensätze werden den 3D-Daten eines virtuellen dreidimensionalen Substrats, insbesondere einer virtuellen Automobilkarosserie oder deren Teile, mittels eines Datenverarbeitungsprogramms bei einem virtuellen Beleuchtungs- und Betrachtungswinkel des virtuellen Substrats zugeordnet und mittels einer Wiedergabeeinrichtung visualisiert.

## Beschreibung

Die Erfindung betrifft ein Verfahren und eine Vorrichtung zur farbmetrischen Messung insbesondere von Effekt- und Uni-Lacken.

In der Automobilindustrie hat sich mit der Einführung der wagenfarbig lackierten Anbauteile eine Farbmessung auf Basis spektralphotometrischer Daten durchgesetzt. Diese farbmetrischen Daten werden in der Qualitätssicherung eingesetzt um die durch dem Menschen vorgenommene, oft subjektive Farbbeurteilung zu ersetzen.

Aufgrund technischer Rahmenbedingungen hat sich die Farbmessung mittels transportabler Farbmeßgeräte durchgesetzt, die mit einer fixierten Beleuchtung und drei bis fünf diskreten Beobachtungswinkeln arbeiten (X-Rite). Diese Meßwerte können, wie sich in vielen Automobillackierereien zeigt, als Qualitätswerkzeug dienen; es läßt sich aber daraus kein Rückschluß auf den Farbeindruck am Fahrzeug ableiten.

Insbesondere bei der Festlegung von Grenzwerten für die Qualitätswerkzeuge ist daher der visuelle Eindruck nach wie vor maßgebend. Ebenso kann die Wirkung einer Farbe auf dem zu lackierenden Fahrzeug nicht anhand einer sogenannten "5-Winkelmessung" ausreichend beschrieben werden.

Zur exakteren Beschreibung einer Farbe dienen ferner bekannte Laborgeräte, bei denen sich Beleuchtung und Detektor so gegeneinander ausrichten lassen, daß theoretisch alle durch das menschliche Auge aufgenommenen Farbreflektionen aufgenommen werden können. Eine derartige Messung ist aber sehr aufwendig und kann nicht als Routinemessung dienen.
Die Anforderungen an das optische Erscheinungsbild der oft werkstoffseitig verschiedenen, lackierten Außenhautteile von Automobilen sind in jüngster Vergangenheit stets gestiegen. Wichtigstes Kriterium ist neben einem über die gesamte Karosserie gleichbleibenden Glanz der Farbton. Farbtonurmuster dienen dabei als Referenz für Lackierlinien und Zulieferer.

Um die Reproduzierbarkeit eines festgelegten Farbtons zu prüfen, hat in jüngerer Vergangenheit die Farbmessung, insbesondere durch die Entwicklung portabler Messgeräte erheblich an Verbreitung und Bedeutung hinzugewonnen.

Die Messungen erfolgen dabei unter definierter Geometrie des Beobachters zur Lichtquelle. Weit verbreitet sind Meßsysteme, die Spektralphotometer umfassen, die partiell diskrete Werte liefern, die jedoch nur an wenigen Punkten bei einigen ausgesuchten Karosserien aufgenommen werden. Derartige Spektralphotometer sind in der Lage, die Intensitäten einzelner Wellenlängen zu messen, auf deren Basis auch Farbwerte für nicht direkt eingesetzte Lichtarten berechnet werden können.

Zur Beurteilung des Farbtons hat sich der CIE L*a*b*-Farbraum (auch CIE-System genannt) bewährt. Hier kann der Farbton in Zahlenwerten als L* (Helligkeit), a* (grünrot-Achse) und b* (blau-gelb-Achse) beschrieben werden. Die L*-, a*- und b*-Werte werden aus den Reflektionswerten der spektralphotometrischen Messungen, den Normspektralwertfunktionen sowie der Strahlungsverteilung der eingesetzten Lichtart berechnet. Es ist bekannt, diese Werte in 3 bis 5 verschiedenen Winkeln für einen Messpunkt zu bestimmen. Erfasst werden partiell diskrete Werte, die jedoch nur an wenigen Punkten bei einigen ausgesuchten Karosserien aufgenommen werden. Durch das üblicherweise manuelle Handling ist ein hoher zeitlicher Aufwand nötig. Zudem können die Messungen durch die wechselnden Bedingungen fehlerbehaftet sein.

Bei derartigen Mehrwinkel-Spektralphotometern ist die Ausrichtung der Messeinheit parallel zur Tangente der Objektoberfläche sehr wichtig, da nur so die Winkel der Messgeometrie exakt positioniert werden können. Da dies bei gekrümmten Oberflächen nur bis zu einem gewissen Grenzradius möglich ist, finden bei Spektralphotometern dieser Art vorzugsweise planare Proben Verwendung. Durch eine Reduktion auf wenig Informationen lassen sich die mit diesen Messwerten gewonnenen Farbinformationen an virtuellen Darstellungen (Automobile) nur durch Extrapolation der Zwischenwerte ermitteln. Die virtuelle Darstellung ist damit nicht mit der echten Information vergleichbar.

Wünschenswert wäre daher eine flächige Farbtonmessung. Es wäre der schnelle Vergleich zwischen dem über die gesamte Karosse hinweg detektierten Farbton mit den Daten einer im Rechner gespeicherten Farbton-Urkarosse möglich. Hierdurch würde sich zudem auch die Messgeschwindigkeit und somit die Zahl der zur Qualitätssicherung betrachteten Karosserieserien erhöhen. Zudem könnten zusätzlich Aussagen über eventuelle Lackierfehler und die Wolkigkeit einer lackierten Fläche getroffen werden.

Es hat sich gezeigt, dass die Auswertung derzeit bekannter Messungen keine ausreichende Farbbewertung auf gekrümmten Flächen zulässt. Speziell Effektlacke lassen sich so nicht ausreichend simulieren und beurteilen.

Aus der WO 02/082063 A1 ist ein Verfahren bekannt, bei dem von einer Lichtquelle Licht auf mindestens eine Detektionsfläche auf einer lackierten Probe eingestrahlt und das Licht von einem Flächendetektor empfangen wird. Hierbei werden die Beleuchtungs- und Detektionswinkel relativ zur Messfläche gegeneinander verstellt und die RGB-Werte des für eine Mehrzahl von Winkeln vom Flächendetektor empfangenen Lichts in Abhängigkeit des Beleuchtungs- und Detektionswinkels registriert und einer Datenverarbeitungseinrichtung zugeführt. Die so gewonnenen Daten können zum Zwecke der Formulierung der Zusammensetzung einer Farbe mit denjenigen einer Farbdatenbank verglichen werden.

Wie eine bestimmte Farbformulierung an einem dreidimensionalen Substrat einer konkreten Gestalt wirkt, lässt sich mit diesem Verfahren nicht ermitteln.

Der Erfindung liegt daher die Aufgabe zugrunde, ein Verfahren zur Farbtonmessung zu schaffen, mit dem sich eine ausreichend genaue Farbtonbewertung auch bei Effektlacken im Hinblick auf den durch den Effektlack an einem dreidimensionalen Substrat konkreter Gestalt vermittelten optischen Eindruck durchführen und visualisieren lässt.

Diese Aufgabe wird durch das in Anspruch 1 wiedergegebene Verfahren und die in Anspruch 10 wiedergegebene Vorrichtung zur Anwendung des Verfahrens gelöst.

Bei dem erfindungsgemäßen Verfahren wird eine vorzugsweise planare lackierte Fläche mittels einer Lichtquelle, beispielsweise von einer Halogenlampe, beleuchtet. Die Rot-Grün-Blau-Werte (RGB-Werte) des von der lackierten Fläche reflektierten Lichts werden mit Hilfe eines Flächensensors, der vorzugsweise in CCD-Technik arbeitet, erfasst und einer Datenverarbeitungseinrichtung zugeleitet. Hier werden die RGB-Werte den zugehörigen Beleuchtungs- und Detektionswinkeln zugeordnet. Die so gewonnenen Datensätze werden mittels an sich bekannter Rendering-Datenverarbeitungsprogramme auf die 3D-Daten eines virtuellen dreidimensionalen Substrats, insbesondere auf die 3D-Daten einer virtuellen Automobilkarosserie oder deren Teile in Abhängigkeit von Beleuchtungs- und Betrachtungswinkeln umgerechnet. Die ermittelten Farbwerte werden auf einer optischen Wiedergabeeinrichtung - beispielsweise auf einem Bildschirm - abgebildet. Der von dem virtuellen dreidimensionalen Substrat vermittelte optische Eindruck kann somit anhand der Messung an nur einer Probe in Abhängigkeit von Beleuchtungs- und Betrachtungswinkeln dargestellt werden.

Die Vorteile und bevorzugte Weiterbildungen des erfindungsgemäßen Verfahrens sollen im Folgenden am Beispiel der Automobilarosserie erläutert werden. Es versteht sich, dass anstatt der Karosserie auch deren Teile oder auch andere dreidimensionale Substrate stehen können.

Durch Verwendung eines sogenannten CCD-Chips als Detektor und eine IT gesteuerten Anlage, die Beleuchtungs und Detektorstellung so gegeneinander verstellt, daß eine ausreichende Zahl an Meßdaten zur Verfügung stehen, die dann über bekannte Software eine virtuelle Darstellung einer mit dieser Farbe lackierten Karosserie ermöglichen. Für diese Darstellung ist ein Zugang zu den 3D-Daten der Karosserie notwendig. Auf Basis dieser Oberflächendaten läßt sich der mittels der genannten Meßvorrichtung ermittelte Datensatz mit Hilfe bekannter Rendering Software auf die virtuelle Karosserie übertragen.

Desweiteren lassen sich Qualitätsfragen klären, die aufgrund der arbeitsteiligen Organisation der Automobilhersteller täglich aufkommen: Die Lackierung wagenfarbiger Anbauteile wird oftmals außerhalb des für die Lackierung der Karosserie zuständigen Werkes vorgenommen. Für die Beurteilung einer Farbabweichung des Anbauteiles ist es i.d.R. erforderlich, daß ein sogenannter Anbauversuch vorgenommen werden muß. Solange keine Aussage durch diesen Versuch erfolgt, kann die Produktion (Lackierung) dieser Anbauteile nicht fortgesetzt werden, oft entstehen dadurch hohe an Ausfälle an Maschinenbelegungszeiten. Mit Hilfe der genannten Meßvorrichtung kann die Farbqualität dieses abweichenden Bauteiles an eine auf einem kalibrierten Bildschirm projizierte Karosserie virtuell angebaut werden und wesentlich besser als heute üblich, anhand einer kurzen Messung beurteilt werden. Gleichzeitig kann diese Abweichung im Vergleich zu anderen Werken, die ggfs dieses Bauteil ebenfalls einsetzen beurteilt werden. Diese Beurteilung ist erforderlich, weil die verschiedenen Lackierereien i.d.R abweichende Farbergebnisse für den gleichen Farbton ergeben.

Der besondere Vorteil dieses Verfahrens liegt u.a. auch darin, dass sich Auswirkungen von Veränderungen der Gestalt der Automobilkarosserie auf den durch eine bestimmte Farbe vermittelten optischen Eindruck anhand der virtuellen Automobilkarosserie darstellen lassen. Hierdurch können beispielsweise Designänderungen vermieden werden, die sich bei bestimmten Farbtönen negativ auf den von der Automobilkarosserie vermittelten optischen Eindruck auswirken würden.

Zudem kann das Verfahren eingesetzt werden, um Kunden darzustellen, wie eine bestimmte Farbe auf einer bestimmten Automobilkarosserie wirkt, was anhand der üblicherweise vorhandenen kleinen Farbmustern bislang nicht möglich ist. "Böse Überraschungen" hinsichtlich des von der gewählten Farbe vermittelten optischen Eindrucks lassen sich hierdurch vermeiden.

Darüber hinaus ist es möglich, vorherzusagen, ob Anbauteile, die beispielsweise an anderer Stelle lackiert wurden und daher Farbunterschiede aufweisen können, zu einer lackierten Automobilkarosserie passen. Hierzu werden die Datensätze von der Automobilkarosserie und von den Anbauteilen an parallel lackierten Proben nach dem erfindungsgemäßen Verfahren aufgenommen und auf die virtuelle Karrosserie bzw. die virtuellen Anbauteile umgerechnet. Somit kann über einen viruellen Anbauversuch die Qualität der Lackierung beurteilt werden.

Eine Kalibrierung des Verfahrens erfolgt vorzugsweise dadurch, dass das Ergebnis einer nach dem obigen Verfahren durchgeführten Messung mit einer echten in derselben Farbe lackierten Karosse in einem definierten Umfeld - beispielsweise einem Präsentationsraum - verglichen wird. Versuche haben gezeigt, dass mit dem erfindungsgemäßen Verfahren zuverlässig der von einer Automobilkarosserie vermittelte optische Eindruck für nahezu beliebige Farbtöne darstellbar ist, wenn die Kalibrierung für lediglich einen bestimmten Farbton durchgeführt wird.

Die Messfläche ist vorzugsweise planar ausgebildet. Die Erfassung der RGB-Werte unter verschiedenen Beleuchtungs- und Detektionswinkeln kann dann erfolgen, in dem die Lichtquelle und/oder der Flächensensor halbkreisförmig über der planaren, lackierten Fläche verlagert werden.

Erfolgt die Messung - wie bevorzugt - an der lackierten Fläche unter zumindest nahezu sämtlichen möglichen Beleuchtungs- und Betrachtungswinkeln, so lässt sich der durch die Karosse vermittelte optische Eindruck besonders gut mittels des erfindungsgemäßen Verfahrens auch in Abhängigkeit der Stellung des Betrachters zu der Karosse und des Lichteinfallswinkels darstellen, da mittels des Datenverarbeitungsprogramms jeder Stelle der Karosse, die in elektronischer Form vorzugsweise in CAD-Daten vorliegt, entsprechende Winkeldaten zugeordnet werden können.

Wird als Flächensensor ein CCD-Sensor eingesetzt, so hat jeder Pixel eine bestimmte Position zum jeweiligen Betrachtungswinkel. Eine Integrierung über eine Mehrzahl von Pixeln sowie die Erzeugung redundanter Analysedaten ist daher möglich. Zusätzlich ergibt sich mit der erfindungsgemäßen Messanordnung über die Streuung der Messdaten über die betrachtete Fläche eine Aussage über das sog. "sparkling" zu treffen.

Um den Datenverarbeitungsaufwand zu beschränken kann die Karosserie in Flächen verschiedener Beleuchtungs- und Betrachtungswinkel unterteilt werden. Es hat sich gezeigt, dass eine gute Farbeindruckwiedergabe erzielt wird, wenn die Karosse hierzu in dreieckige Flächen aufgeteilt wird, die in unterschiedlichen Winkeln zum Betrachter stehen.

Als RGB-Werte können skalierte Zahlenwerte zur Festlegung der Farbwiedergabe eines Pixels an der Wiedergabeeinrichtung definiert werden.

Wird - wie besonders bevorzugt - weiterhin die Flächendetektorachse relativ zu der Probe verschoben, und werden hierbei Farbmesswerte aufgenommen, so kann der der Farbeindruck in Abhängigkeit der Lackierrichtung - auch Azimut genannt - ermittelt werden.

Die zur Anwendung des Verfahrens geeignete Vorrichtung umfasst eine Lichtquelle und einen Flächensensor, die relativ zu einer planaren, lackierten Messfläche einer Probe derart verlagerbar sind, dass das von der Detektionsfläche reflektierte Licht unter verschiedenen Beleuchtungs- und Betrachtungswinkeln empfangen werden kann. Ferner umfasst die Vorrichtung eine Datenverarbeitungseinrichtung zum Speichern und der Zuordnung der von dem Flächensensor empfangenen RGB-Werte in Abhängigkeit der Positionen der Lichtquelle (Beleuchtungswinkel) und des Flächensensors (Detektionswinkel). Mit der Datenverarbeitungseinrichtung werden die so gewonnenen Datensätze zu den 3D-Daten eines virtuellen dreidimensionalen Substrats, insbesondere einer virtuellen Automobilkarosserie oder deren Teile, bei einem virtuellen Beleuchtungs- und Betrachtungswinkel des virtuellen Substrats zugeordnet.

Der in der Vorrichtung verwendete Flächensensor kann einen digital arbeitenden Detektor umfassen, der - besonders bevorzugt - als CCD-Chip ausgestaltet sein kann.

Die Ausgestaltung als CCD-Chip ist besonders von Vorteil, da ein CCD-Sensor zur Farbwiedergabe das eingestrahlte Licht in die Farben Rot, Grün, Blau aufspaltet. Es können die so erhaltenen RGB-Werte direkt dem Datenverarbeitungsprogramm zugeführt werden.

Zur Aufspaltung des Lichts haben sich in der Praxis unterschiedliche technische konzepte, beispielsweise die 3-Chip, die X3-Chip oder die 1-Chip Technik mit Farbfiltermosaik etabliert. Sämtliche Technologien sind grundsätzlich für die Anwendung des erfindungsgemäßen Verfahrens geeignet.

Die Lichtquelle und der Flächensensor sind vorzugsweise derart angeordnet und gelagert, dass sie auf Kreisbögen verlagerbar sind. Es ist jedoch ebenfalls möglich, das reflektierte Licht von einer Mehrzahl von Detektoren aufzunehmen, die hablkreisförmig zur Probe angeordnet sind. Die Messzeiten können somit reduziert werden. Ferner ist es dann möglich, nur kurz, beispielsweise blitzlichtartig zu beleuchten.

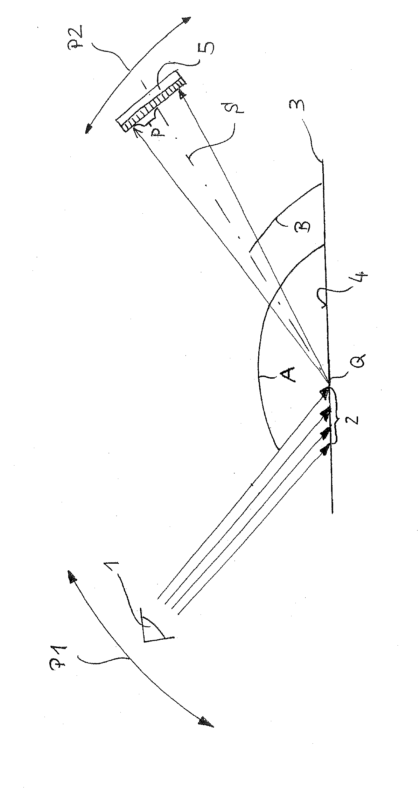

Die Erfindung soll nun anhand der beigefügten Zeichnung verdeutlich werden.

Von einer Lichtquelle 1 wird Licht auf eine Detektionsfläche 2 einer Probe 3 gesandt, die eine planare, lackierte Oberfläche 4 aufweist. Das von der Detektionsfläche reflektierte Licht wird von einem Flächendetektor 5 aufgenommen, der als CCD-Chip ausgestaltet ist. Sowohl die Lichtquelle 1, als auch der Detektor 5 sind relativ zu einander und relativ zur Detektionsfläche 2 verlagerbar, wie durch die Pfeile P1 und P2 symbolisiert werden soll.

Zu jedem Punkt Q der Detektionsfläche 2 gibt es nun N-Beobachtungswinkel, die aus dem Beleuchtungswinkel A und dem Betrachtungswinkel B zu berechnen sind. Jedem Pixel 6 des Flächendetektors 5 kommt eine bestimmte Position P zum Betrachtungswinkel B zu.

Zu jedem Beleuchtungswinkel A und Betrachtungswinkel B werden die von den einzelnen Pixeln erfassten RGB-Werte einer in der Zeichnung nicht dargestellten Datenverarbeitungsanlage zugeführt und mittels eines aus der Computerspieletechnologie bekannten handelsüblichen Datenverarbeitungsprogramms einer virtuellen Karosse in Abhängigkeit des entsprechenden Betrachtungswinkels zugeordnet. Das sich so ergebende Bild wird mittels eines in der Zeichnung ebenfalls nicht dargestellten Bildschirms visualisiert.

## Patentansprüche

1. Verfahren zur farbmetrischen Messung von Effekt- und Uni-Lacken,
bei dem von einer Lichtquelle (1) Licht auf mindestens eine Detektionsfläche (2) auf einer lackierten Messfläche (4) einer Probe (3) eingestrahlt und das von der Messfläche (4) der Probe (3) reflektierte Licht von einem Flächendetektor (5) empfangen wird,
wobei die Beleuchtungs- und die Detektionswinkel relativ zur Messfläche gegeneinander verstellt und RGB-Werte des für eine Mehrzahl von Winkeln vom Flächendetektor empfangenen Lichts in Abhängigkeit des Beleuchtungs- und Detektionswinkel registriert und einer Datenverarbeitungseinrichtung zugeführt werden,
und wobei die so gewonnenen Datensätze den 3D-Daten eines virtuellen dreidimensionalen Substrats, insbesondere einer virtuellen Automobilkarosserie oder deren Teile, mittels eines Datenverarbeitungsprogramms bei einem virtuellen Beleuchtungs- und Betrachtungswinkel des virtuellen Substrats zugeordnet und mittels einer Wiedergabeeinrichtung visualisiert werden.

2. Verfahren nach Anspruch 1, **dadurch gekennzeichnet, dass** als Datenverarbeitungsprogramm ein handelsübliches Rendering-Programm verwendet wird.

3. Verfahren nach Anspruch 1 oder 2, **dadurch gekennzeichnet, dass** eine Kalibrierung des Verfahrens durch Vergleich einer nach dem Verfahren durchgeführten Messung mit einem echten in derselben Farbe lackierten dreidimensionale Substrat, insbesondere einer echten Automobilkarosserie in einem definierten Umfeld durchgeführt wird.

4. Verfahren nach einem der Ansprüche 1 bis 3, **dadurch gekennzeichnet, dass** das Licht auf eine planare Detektionsfläche (2) auf einer lackierten Messfläche (4) einer Probe (3) eingestrahlt wird.

5. Verfahren nach Anspruch 4, **dadurch gekennzeichnet, dass** die Lichtquelle und/oder der Flächensensor halbkreisförmig über der Detektionsfläche (2) verlagert werden.

6. Verfahren nach einem der Ansprüche 1 bis 5, **dadurch gekennzeichnet, dass** als Flächensensor ein CCD-Sensor eingesetzt wird.

7. Verfahren nach einem der Ansprüche 1 bis 6, **dadurch gekennzeichnet, dass** das virtuelle dreidimensionale Substrat, insbesondere die virtuelle Automobilkarosserie oder deren Teile in Flächen verschiedener Beleuchtungs- und Betrachtungswinkel unterteilt und den Flächen unter entsprechenden Winkeln aufgenommene Farbwerte zugeteilt werden.

8. Verfahren nach einem der Ansprüche 1 bis 7, **dadurch gekennzeichnet, dass** die RGB-Werte als skalierte Zahlenwerte zur Festlegung der Farbwiedergabe eines Pixels an der Wiedergabeeinrichtung definiert werden.

9. Verfahren nach einem der Ansprüche 1 bis 8, **dadurch gekennzeichnet, dass** die Flächendetektorachse (S) relativ zu der Probe verschoben wird.

10. Verfahren nach einem der Ansprüche 1 bis 9, **dadurch gekennzeichnet, dass** das reflektierte Licht von einer Mehrzahl von Detektoren aufgenommen wird, die hablkreisförmig zur Probe angeordnet sind.

11. Vorrichtung zur Anwendung des Verfahrens nach einem der Ansprüche 1 bis 10,
mit einer Lichtquelle (1), die relativ zu einer Messfläche (4) einer Probe (3) zur Änderung des Beleuchtungswinkels verlagerbar ist,
mit einem Flächendetektor (5) zur Aufnahme der RGB-Werte des von der Detektionsfläche (2) reflektierten Lichts, wobei der Flächendetektor (5) relativ zu der Messfläche (4) unabhängig von der Lichtquelle (1) verlagerbar ist, derart, dass das von der Detektionsfläche (2) reflektierte Licht unter verschiedenen Detektionswinkeln empfangen werden kann,
mit einer Datenverarbeitungseinrichtung zur Speicherung und Zuordnung der RGB-werte zu den zugehörigen Beleuchtungs- und Detektionswinkeln und zur Zuordnung der so gewonnenen Datensätze zu den 3D-Daten eines virtuellen dreidimensionalen Substrats, insbesondere einer virtuellen Automobilkarosserie oder deren Teile, bei einem virtuellen Beleuchtungs- und Betrachtungswinkel des virtuellen Substrats, und
mit einer Wiedergabeeinrichtung zur Visualisierung des dreidimensionalen Substrats.

12. Vorrichtung nach Anspruch 11, **dadurch gekennzeichnet, dass** der Flächendetektor (5) einen digital arbeitenden Detektor umfasst.

13. Vorrichtung nach Anspruch 12, **dadurch gekennzeichnet, dass** der Flächendetektor einen CCD-Chip umfasst.

14. Vorrichtung nach einem der Ansprüche 11 bis 13, **dadurch gekennzeichnet, dass** die Lichtquelle (1) derart gelagert ist, dass sie in einem Kreisbogen verlagerbar ist.

15. Vorrichtung nach einem der Ansprüche 11 bis 14, **dadurch gekennzeichnet, dass** die Bildaufzeichnungseinrichtung (5) derart gelagert ist, dass sie in einem Kreisbogen verlagerbar ist.

16. Vorrichtung nach einem der Ansprüche 11 bis 15, **dadurch gekennzeichnet, dass** die Wiedergabeeinrichtung einen Bildschirm umfasst.
